# DEMANDE DE BREVET EUROPEEN

(11) **EP 2 477 253 A1**
(43) Date de publication de la demande: **18.07.2012**
(21) Numéro de dépôt: 12150389.0
(22) Date de dépôt: 06.01.2012
(51) Int. Cl.: H01M 2/10, H01M 2/30, H01M 10/42, H01M 10/50, B60K 1/04, B60R 16/04, B60S 5/06

(54) **Dispositif de réception d'une pluralité de batterie**

(30) Priorité: 13.01.2011 FR 1150292
(71) Demandeur: Société Nationale des Chemins De Fer Français - SNCF, 75014 Paris (FR)
(72) Inventeur: Jeunesse, Alain, 92160 ANTONY (FR); Marchand, Francis, 10510 Mazières la Grande Paroisse (FR); Thiounn, Marina, 78120 Rambouillet (FR); Huet, Thierry, 37270 Saint Martin le Beau (FR); El Hamss, Farid, 37300 Joué Les Tours (FR); Dondel, Théo, 37000 Tours (FR)
(74) Mandataire: Gevers France

(57) **Abrégé**

L'invention concerne un dispositif de réception 1 d'une pluralité de batteries comprenant un fond 2 et une paroi périphérique 3 délimitant un logement 4 apte à recevoir la pluralité de batteries, caractérisé en ce qu'il comprend une paroi interne 10 qui s'étend dans le logement 4 et qui délimite un conduit 11 de circulation d'un flux d'air.

## Description

Le secteur technique de la présente invention est celui des chemins de fer et plus particulièrement des dispositifs aptes à recevoir et maintenir ensemble une pluralité de batteries montée sur un véhicule ferroviaire chargé de tracter des rames ou des convois.

Les locomotives connues emploient une pluralité de moteurs électriques montés en général sur des bogies assemblés à une plateforme constitutive de la locomotive. Ces moteurs reçoivent l'énergie électrique en provenance d'une caténaire ou en provenance d'une génératrice installée sur la locomotive.

Dans ce second cas, cette génératrice de courant est accouplée à un moteur à combustion interne, qui consomme une quantité importante de carburant, notamment du diesel.

La raréfaction des ressources pétrolières conduit les constructeurs et exploitants de ce type de locomotive à développer des engins ferroviaires qui fonctionnent à partir de nouvelles sources d'énergie capable de stocker et de restituer une énergie électrique. Il a donc été envisagé de fournir l'énergie électrique nécessaire à la traction de l'engin ferroviaire à partir de batteries embarquées sur l'engin. La demande électrique imposée par la traction de l'engin conduit à employer de nombreuses cellules électrochimiques et ce nombre important de cellules génère un problème de volume et de masse sur l'engin qui limite les possibilités d'implantation pour d'autres composants.

Ces difficultés d'implantation des batteries sur l'engin se combinent à la nécessité d'en assurer un bon conditionnement thermique, ce dernier étant le garant d'un bon fonctionnement des batteries, de l'obtention de bonnes performances et de l'obtention d'un bon niveau de fiabilité des batteries.

Compte tenu des difficultés d'implantation évoquées ci-dessus, l'emploi d'un moyen de refroidissement de type forcé n'est pas envisageable car il occupe un volume important, et par conséquent non disponible sur l'engin ferroviaire. Il convient donc trouver une solution de conditionnement thermique des batteries aisée à mettre en oeuvre mais qui garantit un bon conditionnement thermique des éléments électrochimiques.

Le but de la présente invention est donc de résoudre les inconvénients décrits ci-dessus principalement prévoyant un support ou dispositif de réception d'une multiplicité de moyens de stockage d'électricité, communément appelé batterie, et qui comprend un moyen assurant une circulation du flux d'air entre les batteries constituant la source d'énergie électrique embarquée sur l'engin ferroviaire.

L'invention a donc pour objet un dispositif de réception d'une pluralité de batteries comprenant un fond et une paroi périphérique délimitant un logement apte à recevoir la pluralité de batteries, caractérisé en ce qu'il comprend une paroi interne qui s'étend dans le logement et qui délimite un conduit de circulation d'un flux d'air. Les batteries prévus sont par exemple des éléments individuels électrochimiques comprenant chacun une borne positive et une borne négative. Le fond représente la zone du dispositif selon l'invention où reposent les batteries alors que la paroi périphérique entoure ces dernières, ladite paroi périphérique s'étendant perpendiculairement par rapport au fond. La paroi interne délimite par rapport au logement un canal dans lequel un flux d'air de ventilation et/ou de refroidissement des batteries peut circuler.

Selon une première caractéristique de l'invention, la paroi interne s'étend dans un plan parallèle au plan dans lequel s'étend la paroi périphérique. Ainsi, le conduit de circulation d'air forme une cheminée, avantageusement installée au centre du logement qui reçoit les batteries.

Selon une deuxième caractéristique de l'invention, le conduit de circulation du flux d'air est dépourvu de batterie.

Selon une autre caractéristique de l'invention, le dispositif selon l'invention comprend au moins une zone de réception d'un moyen de raccordement électrique de la pluralité de batteries. Les batteries peuvent être reliées électriquement en série ou en parallèle et le support, formant le dispositif, comprend au moins zone réservée pour recevoir un connecteur qui relie la pluralité de batteries au réseau électrique externe au dispositif, c'est-à-dire le réseau électrique de l'engin ferroviaire.

Dans une telle situation, la zone de réception du moyen de raccordement électrique est délimitée au moins en partie par la paroi périphérique. Quand la paroi périphérique forme un parallélépipède, la zone de raccordement se trouve à un angle de ce dernier.

Avantageusement, le dispositif selon l'invention comprend deux zones de réception recevant chacune son moyen raccordement électrique. Le dispositif selon l'invention est donc pourvu de deux moyens de raccordement électrique formant borne de connexion respectivement positive et négative.

Selon encore une caractéristique de l'invention, le fond et la paroi interne comprennent une multiplicité de trous traversants.

Alternativement ou en complément, la paroi périphérique et la paroi interne comprennent une multiplicité de trous traversants. On organise ainsi une circulation du flux d'air le long des batteries, de manière verticale et/ou horizontale.

Dans le dispositif selon l'invention, il est prévu un moyen de préhension solidarisé sur le dispositif à l'opposé de la zone de réception du moyen de raccordement électrique par rapport au logement de réception de la pluralité de batteries. Le moyen de préhension permet de manoeuvrer le dispositif et il est judicieusement placé de sorte que l'utilisateur ne puisse pas être à proximité des dispositifs de raccordement électrique quand le dispositif est manipulé. On augmente ainsi la sécurité des personnels chargés d'intervenir sur le dispositif.

Avantageusement, le dispositif selon l'invention comprend un châssis sur lequel est solidarisé le fond, ledit châssis recevant au moins deux moyens de coulissement. On autorise ainsi une translation du dispositif à la manière d'un tiroir, ce qui facilite l'accès aux batteries.

L'invention couvre aussi un module de batteries comprenant un dispositif de réception de la pluralité de batteries décrit ci-dessus et une pluralité de batteries installée dans le logement du dispositif de réception.

Avantageusement, un dispositif d'espacement entre chaque batterie de la pluralité de batteries est prévu. On évite ainsi que certaines batteries soient accolées l'une contre l'autre ce qui améliore l'homogénéité du conditionnement thermique.

Dans le module selon l'invention, il est également prévu un dispositif d'ajustement automatique d'un niveau de liquide de chaque batterie. Les batteries d'un même module sont ainsi raccordées à un unique moyen d'ajustement qui, en une seule étape, assure la mise à niveau de toutes les batteries du module.

Un tout premier avantage selon l'invention réside dans la possibilité de refroidir une pluralité de batteries à l'aide d'un dispositif simple et dont l'impact en termes de volume et de masse sur l'engin ferroviaire est négligeable.

Un autre avantage réside dans le fait que ce moyen de conditionnement d'air est passif. Il ne vient pas consommer d'énergie électrique tout en assurant un refroidissement efficace des batteries.

Un autre avantage non négligeable réside dans l'aisance à manipuler le module selon l'invention, notamment grâce à son montage en tiroir.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un exemple de réalisation d'un dispositif de réception selon l'invention,
- la figure 2 est une vue en perspective d'un module de batteries incorporant un dispositif de réception selon l'invention,
- la figure 3 est une vue de dessus du module de la figure 2,
- la figure 4 est une vue en perspective d'un dispositif d'espacement utilisé dans le module de la figure 1,
- la figure 5 est une vue en perspective opposée à la perspective représentée sur la figure 2,
- la figure 6 est une vue en perspective illustrant le dessous du dispositif de réception selon l'invention,
- la figure 7 est une vue partielle illustrant un mode de réalisation du dispositif de coulissement utilisé dans le module selon l'invention.

Il faut noter que les figures exposent l'invention de manière détaillée pour mettre en oeuvre l'invention, lesdites figures pouvant bien entendu servir à mieux définir l'invention, le cas échéant.

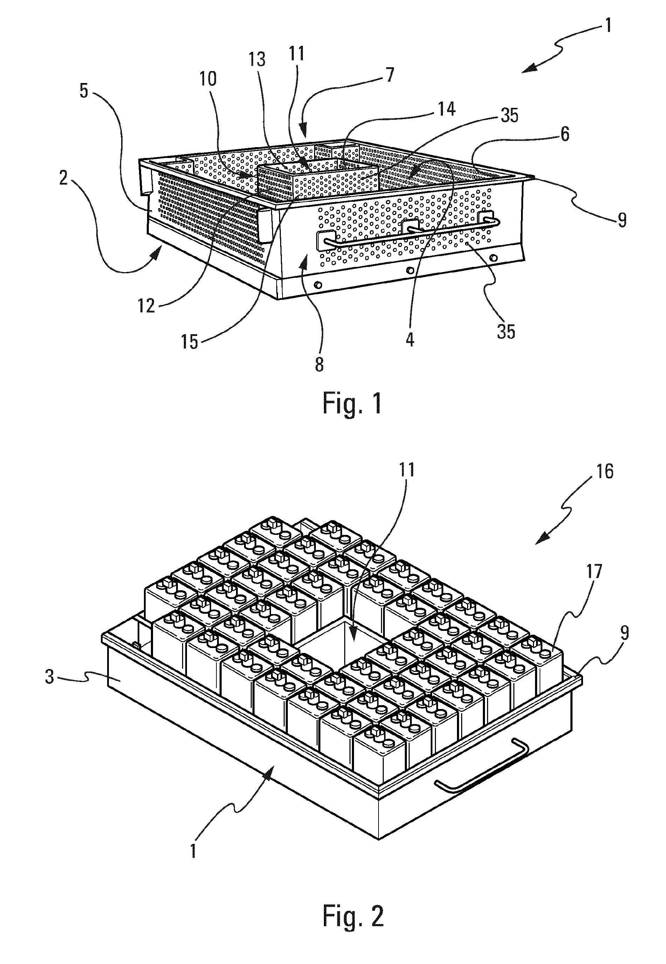

La figure 1 montre un dispositif de réception 1 d'une pluralité de batteries destinées à fournir une énergie électrique nécessaire à la mise en mouvement d'un engin ferroviaire. Ce dispositif de réception est également appelé support ou bac récepteur de la pluralité de batteries.

Ce dispositif de réception 1 est constitué d'un fond 2 à la périphérie duquel s'étend une paroi périphérique 3. Le fond 2 et la paroi périphérique 3 sont formés par des plaques rectilignes, avantageusement réalisées en métal ou en plastique.

La paroi périphérique 3 s'étend dans un plan orthogonal au plan dans lequel s'étend le fond 2 de sorte à délimiter une zone qui sert de logement 4 pour recevoir la pluralité de batteries.

Le logement 4 peut par exemple prendre la forme d'un parallélépipède carré ou rectangle. La paroi périphérique 3 est alors formée par un premier flanc 5 installé de manière parallèle et opposée, par rapport au fond 2, à un deuxième flanc 6 qui prend naissance sur ce dernier. La paroi périphérique 3 comprend également un troisième flan 7, placé entre le premier flanc 5 et le deuxième flanc 6, et qui prend naissance sur une tranche du fond 2. Enfin, un quatrième flanc 8 ferme le parallélépipède en étant disposé parallèlement au troisième flanc 7 et entre le premier et le deuxième flanc.

On notera tout particulièrement que la paroi périphérique 3, c'est-à-dire le premier flanc 5, le deuxième flanc 6, le troisième flanc 7 et le quatrième flanc 8, est perforée. Autrement dit, la paroi périphérique 3 comprend une multiplicité de trous traversants 35. On autorise ainsi la circulation du flux d'air à l'intérieur du logement 4 en provenance ou vers l'extérieur du dispositif selon l'invention.

L'extrémité libre de chaque flanc est terminée par un bord 9 plié à 90° par rapport aux plans dans lesquels s'étendent les premier, deuxième, troisième et quatrième flancs. Ce bord 9 forme ainsi une ceinture qui renforce la tenue mécanique du dispositif de réception 1.

Le logement 4 est délimité par le fond 2 et par la paroi périphérique 3, autrement dit par les premier, deuxième, troisième et quatrième flancs respectivement référencé 5, 6, 7 et 8. A l'intérieur de ce logement est prévue une paroi 10 dite interne en ce sens qu'elle s'étend dans le volume défini par le logement 4. Cette paroi interne 10 est agencée de sorte à délimiter un conduit 11 dans lequel circule un flux d'air. Autrement dit, la paroi interne 10 sépare le volume du logement 4 d'avec un évidement qui sert de conduit 11 de circulation du flux d'air.

Il est avantageux que la forme définie par la paroi interne 10 soit identique à celle définie par la paroi périphérique 3. Dans l'exemple de réalisation illustré à la figure 1, la paroi périphérique 3 et la paroi interne 10 forment tous deux un parallélépipède, le parallélépipède formé par la paroi interne 10 étant centré dans le parallélépipède formé par la paroi périphérique 3.

La paroi interne 10 est formée par un premier plateau 12 qui s'étend dans un plan parallèle au plan d'extension du premier flanc 5. A l'opposé de ce premier plateau 12 par rapport au conduit 11, on trouve un deuxième plateau 14 qui s'étend dans un plan parallèle au plan dans lequel s'étend le deuxième flan 6. La paroi interne 10 se poursuit par un troisième plateau 13 parallèle au troisième flanc 7 ainsi que par un quatrième plateau 15 parallèle au quatrième flanc 8. On comprend ainsi que le logement 4 forme une bande annulaire autour du conduit 11 de circulation du flux d'air.

La paroi interne, c'est-à-dire le premier plateau 12, le deuxième plateau 14, le troisième plateau 13 et le quatrième plateau 15, est réalisée par une plaque, par exemple métallique ou en plastique, perforée d'une multiplicité de trous traversants 35. On autorise ainsi la circulation du flux d'air du logement 4 vers le conduit 11 de circulation du flux d'air, et vice-et-versa le cas échéant.

La figure 2 montre le module de batteries qui comprend une pluralité de batteries 17 installées dans le logement défini dans le dispositif de réception 1.

Chaque batterie 17 présente une section parallélépipédique et s'étend sur une hauteur supérieure à la hauteur de la paroi périphérique 3. Autrement dit, la pluralité de batteries 17 dépasse du plan formé par le bord 9.

Le logement 4 est susceptible de recevoir quarante-huit batteries de tension nominale comprise entre 1,2 V et 2 V chacune, ce qui présente l'avantage de constituer un module de batteries d'une tension inférieure à une tension dite de sécurité. On garantit ainsi la sécurité du personnel qui intervient sur l'engin ferroviaire utilisant le module selon l'invention.

Il est apparent sur la figure 2 que l'évidement formant le conduit 11 est dépourvu de batteries de sorte à permettre une circulation du flux d'air. Les batteries 17 sont par ailleurs réparties par rangée au sein du logement.

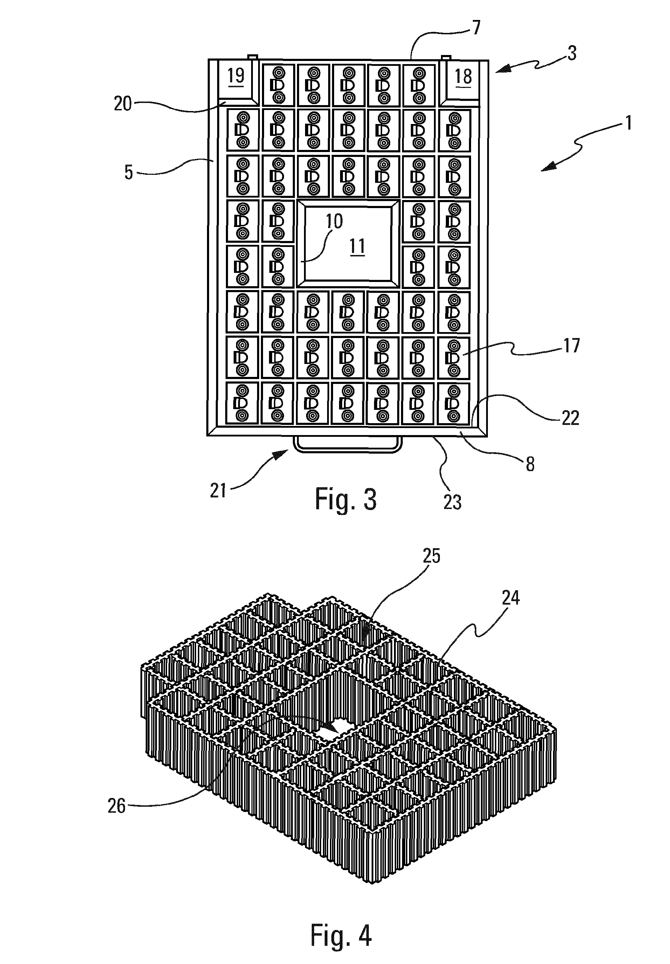

Sur la figure 3, le conduit 11, délimité par les parois internes 10, est installé en position centrale dans le logement 4. Le dispositif de réception 1 comprend aussi au moins une zone de réception 18 dépourvue de batterie. Cette zone de réception 18 forme une cavité dans laquelle est installé un moyen de raccordement électrique de la pluralité de batteries 17. Dans cet exemple de réalisation, le dispositif de réception 1 comporte deux zones de réception, référencées 18 et 19, d'un moyen de raccordement électrique.

Chaque zone de réception 18 ou 19 est formée à un angle du logement 4 et se trouve délimitée d'un côté par la paroi périphérique 3 et de l'autre par une équerre 20 installée dans le logement 4. De manière plus précise, une première zone de réception 18 d'un premier moyen de raccordement électrique est organisée à l'angle du deuxième flanc 6 et du troisième flanc 7. Une deuxième zone de réception 19 d'un second moyen de raccordement électrique est organisée à l'angle du troisième flanc 7 et du premier flanc 5. On notera enfin que la surface occupée par la première zone de réception 18 ou la deuxième zone de réception 19 est égale, ou sensiblement égale, à la surface occupée par une batterie 17.

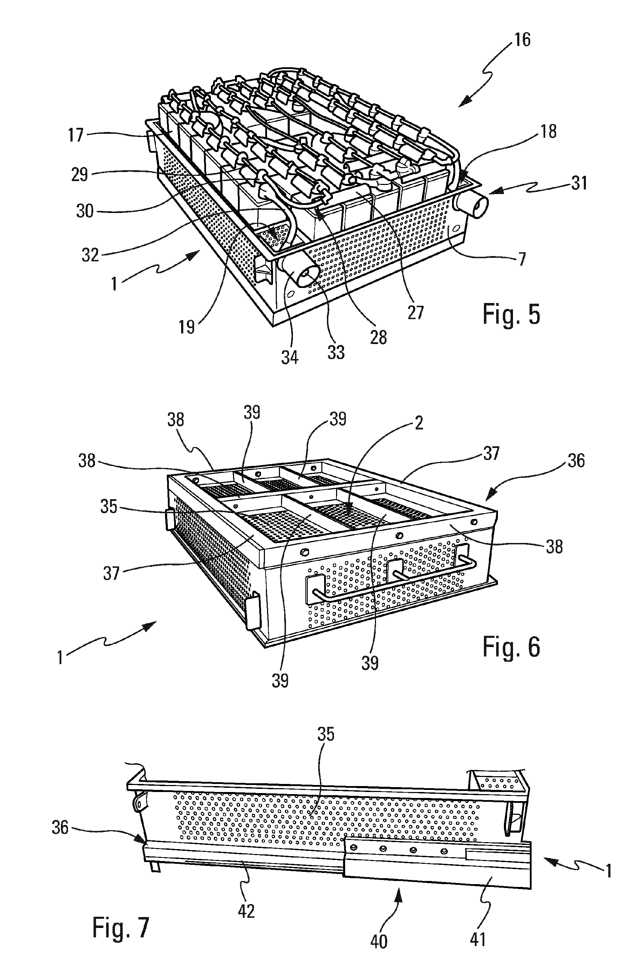

Le moyen de raccordement électrique sera abordé plus en détails à la figure 5 mais il faut retenir qu'il s'agit du point de contact électrique entre la pluralité de batteries 17 et le réseau électrique externe au module de batteries. Pour limiter les risques d'électrocution, l'invention prévoit un moyen de préhension 21 solidarisé sur le dispositif à l'opposé de l'une ou l'autre des première ou deuxième zones de réception 18, 19. Autrement dit, la manipulation du dispositif doit être opérée en attrapant manuellement une zone éloignée des contacts électrique. Pour ce faire, le moyen de préhension 21, qui prend notamment la forme d'une anse ou d'une poignée, est solidarisé sur le quatrième flanc 8 qui opposé au troisième flanc 7 par rapport au logement 4. Ce quatrième flanc 8 présente une face interne 22 tournée vers le logement 4 et une face externe 23 tournée vers l'extérieur du dispositif de réception 1, ledit moyen de préhension 21 étant fixé, par exemple par soudage, sur la face externe 23. Ainsi, la manipulation du dispositif de réception 1 selon l'invention peut être opérée en limitant les risques de contact électrique.

La figure 3 montre aussi la circulation du flux d'air au milieu des batteries.

En effet, les batteries 17 sont espacées les unes par rapport aux autres de sorte à autoriser une circulation d'air entre chacune des batteries 17, en provenance du conduit 11 ou en direction de ce dernier.

La figure 4 montre le composant qui gère l'espacement entre chaque batterie ainsi qu'entre les batteries et la paroi périphérique 3. Il s'agit d'un dispositif d'espacement 24 qui présente par exemple une section crénelée de sorte à garantir l'espace entre batteries ou entre batteries et paroi périphérique tout en autorisant la circulation du flux d'air. Ce dispositif d'espacement 24 comprend une multiplicité d'évidements 25 de dimensions proches des dimensions externes de chaque batterie 17. La section crénelée du dispositif d'espacement offre un effet ressort qui permet de maintenir en appui le dispositif d'espacement contre les batteries et éviter ainsi que ces dernières ne bougent.

Le dispositif d'espacement 24 comprend également un évidement central 26 dont les dimensions correspondent aux dimensions du conduit 11 augmentées de l'épaisseur de chaque plateau formant la paroi interne. Enfin, on notera que le dispositif d'espacement 24 est réalisé en un matériau plastique avantageusement moulé en une seule pièce.

La figure 5 montre le dispositif de réception 1 à l'intérieur duquel est installée la pluralité de batteries 17, formant ainsi le module de batteries 16.

Les batteries 17 sont montées en série. Pour ce faire, elles sont raccordées électriquement les unes aux autres par un pontet 27 qui connecte la borne positive d'une batterie à la borne négative de la batterie adjacente.

Le module selon l'invention comprend également un dispositif d'ajustement automatique 28 d'un niveau de liquide de chaque batterie. En effet, quand il s'agit de batterie de type électrochimique, il peut être nécessaire d'avoir à ajuster la quantité d'eau déminéralisée présente à l'intérieur de chaque batterie 17. Compte tenu du grand nombre de batteries, l'invention permet d'effectuer l'ajustement de niveau d'eau automatiquement et selon une seule étape.

Ce dispositif d'ajustement automatique 28 comprend un réseau de tubes 29 d'alimentation en liquide qui chemine en série d'une batterie à l'autre. Ce dispositif d'ajustement automatique comprend aussi un clapet régulateur 30 dont la fonction est d'autoriser le remplissage d'une batterie puis de l'interrompre quand un niveau déterminé est atteint. Quand le niveau d'une batterie est atteint, le clapet régulateur 30 autorise le passage du liquide vers la batterie suivante pour effectuer sa mise à niveau. Ainsi, toutes les batteries 17 sont automatiquement mises à niveau simplement en alimentant en liquide le dispositif d'ajustement automatique 28.

La première batterie et la dernière batterie du montage en série sont connectées électriquement au moyen de raccordement électrique 31 à l'aide, par exemple, d'un câble 32. Ce moyen de raccordement électrique 31 est constitué d'un conducteur électrique 33 qui s'étend de la première zone 18 ou de la deuxième zone 19 vers l'extérieur du dispositif de réception 1 en passant au travers du troisième flan 7. Le conducteur électrique 33 est terminé par un moyen de connexion amovible qui facilite la connexion et la déconnexion rapide du module de batteries avec le réseau électrique de l'engin. Le conducteur électrique 33 et sa connexion amovible sont entourés par une protection 34 qui limite l'accès direct au conducteur électrique 33. La sécurité du personnel intervenant sur l'engin est ainsi renforcée par l'emploi de ces protections.

La figure 6 montre en détail le fond 2 du dispositif de réception 1. Ce fond 2 est réalisé par une plaque métallique ou plastique perforée d'une multiplicité de trous traversant 35. On autorise ainsi la circulation ascendante ou descendante du flux d'air depuis ou vers le logement 4.

Cette figure 6 illustre aussi la présence d'un châssis 36 sur lequel est solidarisé le fond 2. Ce châssis 36 forme un support qui rigidifie le dispositif de réception selon l'invention. Ce châssis 36 forme un cadre réalisé à partir de deux traverses longitudinales 37 et trois traverses transversales 38 solidarisées perpendiculairement aux traverses longitudinales 37. Ce cadre comprend encore quatre renforts longitudinaux 39 qui s'étendent parallèlement aux traverses longitudinales 37 mais entre ces dernières.

La figure 7 montre un exemple de réalisation d'un moyen de coulissement 40 solidarisé sur le châssis 36. Le dispositif selon l'invention 1 comprend deux moyens de coulissement 40 installés sur le châssis 36, de part et d'autre du logement 4. Chaque moyen de coulissement 40 est fixé sur une des traverses longitudinales 37 et comprend une glissière femelle 41 dans laquelle coulisse une glissière mâle 42. La glissière femelle 41 est solidarisée sur l'engin ferroviaire alors que la glissière mâle 42 est solidarisée sur le châssis 36. Une telle organisation permet d'extraire aisément par translation le module de batteries 16 et le dispositif de réception 1 qui le compose.

## Revendications

1. Dispositif de réception (1) d'une pluralité de batteries comprenant un fond (2) et une paroi périphérique (3) délimitant un logement (4) apte à recevoir la pluralité de batteries, comprenant une paroi interne (10) qui s'étend dans le logement (4) et qui délimite un conduit (11) de circulation d'un flux d'air, dans lequel est prévue au moins une zone de réception (18, 19) d'un moyen de raccordement électrique (31) de la pluralité de batteries, **caractérisé en ce qu'**il est prévu un moyen de préhension (21) solidarisé sur le dispositif (1) à l'opposé de la zone de réception (18, 19) du moyen de raccordement électrique (31) par rapport au logement (4) de réception de la pluralité de batteries.

2. Dispositif selon la revendication 1, dans lequel la paroi interne (10) s'étend dans un plan parallèle au plan dans lequel s'étend la paroi périphérique (3).

3. Dispositif selon l'une des revendications 1 à 2, dans lequel le conduit (11) de circulation est dépourvu de batterie.

4. Dispositif selon l'une quelconque des revendications précédentes, dans lequel la zone de réception (18, 19) du moyen de raccordement électrique (31) est délimitée au moins en partie par la paroi périphérique (3).

5. Dispositif selon l'une quelconque des revendications précédentes, dans lequel le fond (2) et la paroi interne (10) comprennent une multiplicité de trous traversants (35).

6. Dispositif selon l'une quelconque des revendications précédentes, dans lequel la paroi périphérique (3) et la paroi interne (10) comprennent une multiplicité de trous traversants (35).

7. Dispositif selon l'une quelconque des revendications précédentes, comprenant un châssis (36) sur lequel est solidarisé le fond (2), ledit châssis (36) recevant au moins deux moyens de coulissement (40).

8. Module (16) de batteries comprenant un dispositif de réception (1) selon l'une quelconque des revendications précédentes et une pluralité de batteries (17).
